Europäisches Patentamt

European Patent Office

Office européen des brevets

(11) Publication number: **0 028 146**
A1

# EUROPEAN PATENT APPLICATION

(21) Application number: 80303784.5

(51) Int. Cl.³: **G 01 S 7/22**, G 08 G 3/02

(22) Date of filing: 24.10.80

(30) Priority: 26.10.79 GB 7937198

(71) Applicant: **DECCA LIMITED, Decca House 9 Albert Embankment, London SE1 7SW (GB)**

(43) Date of publication of application: 06.05.81
Bulletin 81/18

(72) Inventor: **Parker, Eric, 85 Wodeland Avenue, Guildford Surrey GU2 5LA (GB)**

(74) Representative: **Horton, Andrew Robert Grant et al, BOULT, WADE & TENNANT 27 Furnival Street, London, EC4A 1PQ (GB)**

(84) Designated Contracting States: **AT BE CH DE FR GB IT LI LU NL SE**

(54) Plan position marine radar display including adjustable markers.

(57) A plan position radar display having provision for adjustable markers and resettable generators which are operable to provide signals for offsetting the markers in accordance with a proposed change in course or speed. The offsetting of each marker can be initiated simultaneously with the initial positioning of the marker and may be performed at different times for the various markers.

"PLAN POSITION MARINE RADAR DISPLAY INCLUDING

ADJUSTABLE MARKERS"

This invention relates to plan position marine radar displays and is particularly intended to facilitate the investigation of the risk of collision between a radar carrying craft and any other object (hereinafter called "target") which is displayed on the screen. More particularly it is intended to facilitate the discovery of the optimum collision-avoidance manoeuvre when a risk of collision has been found to exist. The invention is intended in general for use with either "relative motion" displays or "true motion" displays whether they be azimuth stabilised displays, "ships-head-up" displays or other forms of display.

It has been proposed, in the specification of our British Patent No. 1086487 to generate and display on a plan position display screen adjustable markers of which a datum, for example one end, can be positioned on a respective target and which (if the marker is a line) extend back towards the displayed position of the radar carrying craft.   If the displayed position of a target appears to move along the respective marker, towards the radar carrying craft, the risk of collision is immediately apparent.   This simple system does enable the master of the radar carrying craft to ascertain which manoeuvre, if any, he should make to reduce the risk of collison.   Accordingly, it has been further proposed in the aforementioned specification to provide deflecting signals for displacing all the markers progressively in time in accordance with a progressive separation of the actual position of the radar carrying craft and a hypothetical position and also to provide adjustable controls by means of which the master of the radar carrying craft may set in a proposed change in course or speed or both.   By these means according to the aforementioned specification the master can ascertain, by observation of the displayed position of the targets relative to their respective markers, what the risks of collision of the radar carrying craft with those targets would be if the proposed change in course or speed were then actually made.   However, the usefulness of the aforementioned proposal is rather restricted because according to that proposal it is necessary to position the various markers within a short space of time. It is accordingly the object of the present invention to effect an improvement in this form of display to permit the initial positioning of the various markers to be done at substantially different times.

The basis of the invention is the generation of respective signals for the displacement of the respective datum of each marker progressively in time in accordance with a progressive separation of the actual position of the said craft from a hypothetical position and the initiation of the displacement of a marker by the respective signals simultaneously with the positioning of that marker.

Reference will hereinafter be made to the accompanying drawings, in which:-

Figures 1 and 2 are explanatory diagrams of part of a plan position display; and

Figure 3 is a schematic diagram of the relevant part of one embodiment of the invention.

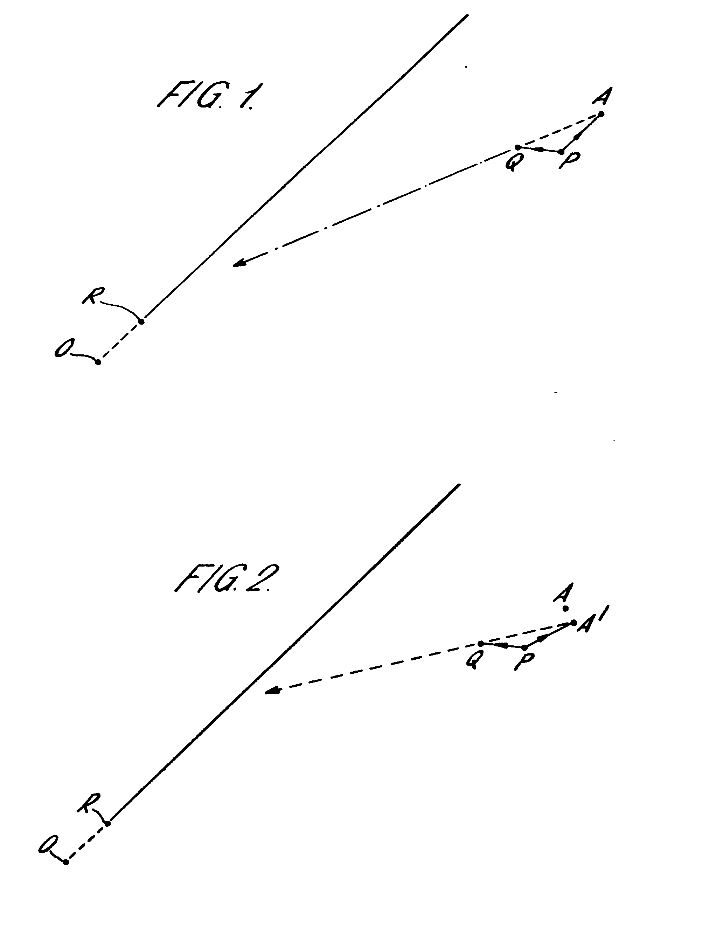

It will be presumed in the following that the invention is generally embodied in a plan position radar display apparatus of the kind generally illustrated in, for example, Figure 1 of the aforementioned specification.

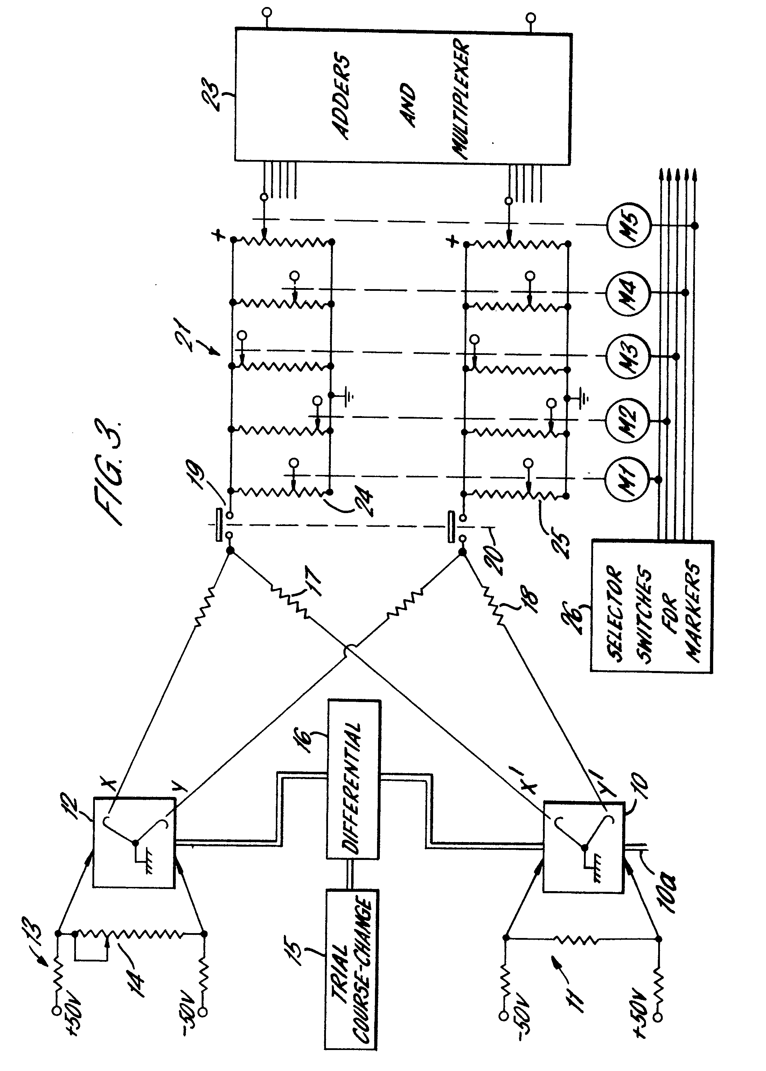

For illustrative purposes it will be  assumed that up to five marker lines may be generated and displayed on the screen.   For each marker line there is a manually operable positioning control for the datum (one end) of the line; the control may be a pair of knobs for controlling radial position and angular position of the datum but may be a rolling ball, joy-stick or other form of control.   Associated with the positioning control would usually be a switch, or set of switches, by means of which the positioning control can be connected to one marker at a time and then disconnected when that marker has been positioned. As will be further explained hereinafter, it is further required that the apparatus includes a calibrated control (such as a manually operable knob) for setting in a proposed change in course, a similar control for setting in a proposed change in speed and a push-button for applying displacements, generated in conformity with the operation of the aforementioned controls, to the markers on the display screen.   However, before the modification of the earlier system in accordance with the present invention is described in detail, reference will be made first to Figures 1 and 2 in order to facilitate the understanding of the present invention.

Figure 1 illustrates part of a plan position display picture including at R the present position of a radar carrying craft heading on course 045. The position of the craft at a previous time (conveniently called "Time Zero") is denoted 0 in the figure. It will be supposed that at Time Zero a marker was positioned on a given target. Although the particular form of marker is not an essential feature of the present invention, since it may have a V-shape or other shape, it is convenient to suppose that the marker is in the form of a straight line of which one end is the aforementioned datum which at zero time is positioned on the displayed position P of the target. Immediately thereafter the datum , normally displayed in the form of a brightened tip, and the response of the target will separate as they move away from their common original position P Let it be supposed that at the present time (for example, two minutes after "Time Zero") the target has reached the position displayed at Q and the bright tip of the marker has reached the position A. During this time the datum (bright tip) of the marker has been moving over the display screen in accordance with the velocity of the radar carrying craft and accordingly the vector AQ represents the target's velocity relative to the radar carrying craft. The test for the likelihood of a collision is whether this relative velocity vector AQ, when extended, passes too close to the displayed position of the radar carrying craft. In practice, the marker line, which in this embodiment of the invention is arranged to point from the position A exactly back towards the radar carrying craft, assists the master of the radar carrying craft to ascertain the risk of collision.

Now let it be supposed that after the target was marked with a marker the radar carrying craft steamed not as it actually did but with a different course and speed so that the datum of the marker, as shown in Figure 2, attains not the position A but the position A' in the same time as before. The target will, as before, have moved to the position Q. The vector A'Q is what the target's relative velocity vector would now be in these hypothetical circumstances and the risk of collision is indicated by how closely the vector A'Q, extended, passes by the position of the radar carrying craft. In order to help the master to assess whether the target, in this hypothetical alternative situation is on a "collision course", the marker would still be arranged to point back towards the position of the radar carrying craft.

It will be apparent that the technical problem is to generate, for each marker, deflecting signals which progressively displace the datum of the marker from A to A', a displacement which corresponds to the separation from the actual position of the radar carrying craft to the hypothetical position it would have occupied had it proceeded with the changed velocity since the time when the marker was set on the position of the target. In the earlier proposal which has been mentioned, the deflecting signals were common to all the markers and accordingly all the markers had to be set at the same time. In the present invention, whose principal aim is to permit the setting of the markers at independent times, the progressive factor in the respective deflecting signals will be different for the various markers. The purpose of the embodiment illustrated in Figure 3 is to enable the common signals which represent or are in conformity with a proposed change in the velocity of the craft to be multiplied by different, progressively increasing, multiplying factors which are caused to start from zero at the time of the setting of the respective markers.

It may be mentioned, before the embodiment of Figure 3 is described, that the signals applied to the display screen for each marker comprise the positioning signals, already mentioned, and the additional respective displacing signals. Normally, the respective X and Y components of the various signals will be combined and fed to the display by way of an appropriate multiplexer in accordance with known practice.

The functional arrangement of Figure 3 provides, for each marker, two additional deflecting signals, for the X and Y directions respectively. The two signals are, in effect, the components of the proposed change in velocity, each multiplied by the elapsed time. It is convenient, however, to regard this product as represented by a proportional change in speed multiplied by a factor corresponding to the actual speed of the craft and the time elapsed from a datum time; this latter factor corresponds to the distance moved by the radar carrying craft since the setting of the particular marker. Accordingly, the embodiment of Figure 3 provides, in common for all the markers, resolved components of a "manoeuvre vector" which represents change in velocity per knot of original speed and, for each marker, provides a pair of ganged potentiometers which multiply the respective resolved components by a factor which is caused to increase progressively from zero by a stepper motor which is driven according to units of distance moved by the radar carrying craft. The particular arrangement is a matter of convenience. It is feasible,

though not at present preferred, to provide common signals representing the resolved components of the proposed change in velocity and to drive the stepper motors at a constant rate so that the progressively varying factors merely increase steadily with time.

The embodiment illustrated in Figure 3 includes a sine/cosine potentiometer 10 which is set in accordance with the radar carrying craft's actual course by means of an input obtained from the ship's compass. This potentiometer is fed with fixed voltages from a resistive network 11. A second sine/cosine potentiometer 12 is fed with voltages from a resistive network 13 which includes, instead of a fixed shunt resistor, a potentiometer 14 which has an intermediate setting corresponding to zero proposed change in the speed of the craft and two limit settings corresponding to a 25% increase and a 100% decrease in the speed of the craft. A knob, represented at 15, controls a shaft by means of which a trial change of course of the radar carrying craft may be set. This shaft, and the shafts of the two potentiometers are linked by a differential 16 so that the second sine/cosine potentiometer 12 is set in accordance with the trial course. The X and Y outputs from the two potentiometers are respectively subtracted in resistive networks 17 and 18 so that the resolved components of the so-called manoeuvre vector are available at the two input terminals of two ganged switches 19 and 20. These switches are ganged to a spring-loaded push-button by means of which, when desired, the deflecting signals for the markers may be applied to the display screen. For each marker there is a pair of ganged potentiometers 24 and 25 driven by a respective stepper motor M1 to M5 by pulses from the ship's log.

Shown schematically in Figure 3 is the connection of the motors from the switches 26 associated with the controllers for the marker. When a respective marker is positioned, and the corresponding switch is operated (as described in UK Specification No. 1086487), the respective stepper motor starts to drive the respective pair of potentiometers from a position corresponding to zero multiplying factor. When the marker is no longer required, by operation of the appropriate switch, the stepper motors are caused, by the feeding of pulses or otherwise, to return the respective pair of ganged potentiometers to the zero position.

The outputs from the respective pairs of potentiometers are added to the respective positioning signals of the respective markers and their respective sums are then multiplexed for application to the display. The adding and multiplexing circuits 26 include in this embodiment five pairs of adders, one adder being provided for adding the output of each respective potentiometer to the respective X or Y positioning signal for the respective marker. The multiplexing circuits are of a construction familiar to those skilled in the art.

In a possible but not preferred method of generating the marker displacement signals, the sine/cosine potentiometers 10 and 12 would be fed with voltages representing the actual speed of the radar carrying craft and the stepper motors would be driven at constant speed so that their rotations represented elapsed time.

It is desirable that the markers, if they be lines, continually point towards the position of the radar carrying craft. This may be readily achieved in a manner familiar to those skilled in the art by detecting the resultant signals determining the positions of the markers in relation to the radar carrying craft, that is to say for each marker the pair of signals constituted by the respective components of the sum of the positioning and additional deflecting signals for that marker. From these signals, which are normally voltages, a pair of ramp signals proportioned according to the negative of the resultant signals may be used for generating the respective marker line.

It will be appreciated that the investigation of the effects of a trial course or speed may be made at any time during the period required for the potentiometers to be driven over their full ranges. This period may be made sufficiently long to accommodate any normal practical requirement.

0028146

CLAIMS:

1. A plan position marine radar display which provides a display on a screen of the positions of the radar carrying marine craft and various targets and in which, under the control of respective controllers a plurality of markers can be positioned on the screen at times substantially different from one another and in such a way that a datum of a marker is located on the position of a displayed target, and in which means are provided for generating respective signals for the displacement of the said datum of each marker progressively with time in accordance with a progressive separation of the actual position of the said craft and a hypothetical position, and in which displacement of a marker by the respective signals is initiated simultaneously with the positioning of that marker.

2. A display according to claim 1 in which the progressive displacements of the markers are controlled by an adjustable control for the production of signals representing or in conformity with a proposed change in the velocity of the craft and, for each marker, a respective stage which effects multiplication of those signals by a respective factor which increases with time from zero.

3. A display according to claim 2 in which the said signals represent components resolved in accordance with the proposed course of the radar carrying craft or a proposed speed or change in speed of the radar carrying craft and the various stages provide factors which increase either steadily with time or in response to distance moved by the said craft respectively.

4. A display according to claim 3 in which each stage comprises a pair of ganged potentiometers driven by a respective stepper motor.

5. A display according to any foregoing claim in which means responsive to the signals determining the resultant position of a marker's datum on the screen are provided for causing the marker to be in the form of a line which is continually reorientated towards the displayed position of the radar carrying craft.

ARGH/ EA261

FIG. 1.

FIG. 2.

FIG. 3.

0028146

## DOCUMENTS CONSIDERED TO·BE RELEVANT

| Category | Citation of document with indication, where appropriate, of relevant passages | Relevant to claim |
|---|---|---|
| | US – A – 3 212 086 (C.F. ROBINSON) <br> * fig. 1 to 10 * <br> –– | |
| A | GB – A – 1 402 848 (DECCA) <br> * fig. 1 to 4 * <br> –– | |
| A | GB – A – 1 259 055 (TOKYO KEIKI SEIZOSHO) <br> * fig. 1 to 5 * <br> –– | |
| A | GB – A – 1 365 508 (ESSO RESEARCH AND ENGINEERING CO.) <br> * fig. 1 to 3 * <br> –– | |
| A | GB – A – 1 118 251 (DECCA) <br> * fig. 1 to 9 * <br> –– | |
| A | GB – A – 1 106 230 (SELENIA-INDUSTRIE, ELETTRONICHE ASSOCIATE) <br> * fig. 1 to 4 * <br> –– | |
| D | GB – A – 1 086 487 (DECCA) <br> * fig. 1 to 6 * <br> –– | |

./..

**CLASSIFICATION OF THE APPLICATION (Int. Cl.³)**

G 01 S 7/22
G 08 G 3/02

**TECHNICAL FIELDS SEARCHED (Int. Cl.³)**

G 01 S 7/22
G 08 G 3/00

**CATEGORY OF CITED DOCUMENTS**

X: particularly relevant
A: technological background
O: non-written disclosure  .
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 22-01-1981 | BREUSING |

EPO Form 1503.1  06.78

**European Patent Office**

**EUROPEAN SEARCH REPORT**

0028146

Application number

EP 80 30 3784.5

- page 2 -

## DOCUMENTS CONSIDERED TO BE RELEVANT

| Category | Citation of document with indication, where appropriate, of relevant passages | Relevant to claim |
|---|---|---|
| A | GB - A - 1 084 969 (PHILIPS ELECTRONIC AND ASSOCIATED INDUSTRIES) * fig. 1 to 4 * | |
| A | US - A - 3 737 902 (R.M. O'HAGAN et al.) * fig. 1 to 7 * | |
| A | US - A - 3 697 986 (K.G. COLBY) * fig. 1 to 4 * | |

**CLASSIFICATION OF THE APPLICATION (Int. Cl.3)**

**TECHNICAL FIELDS SEARCHED (Int. Cl.3)**